# EUROPÄISCHE PATENTSCHRIFT

(11) **EP 4 337 484 B1**
(45) Veröffentlichungstag und Bekanntmachung des Hinweises auf die Patenterteilung: **14.05.2025**
(21) Anmeldenummer: 22706584.4
(22) Anmeldetag: 17.02.2022
(51) Int. Cl.: B60K 1/04, B60K 17/22, B60K 17/24

(54) **AKKUTRÄGER FÜR EIN ELEKTROFAHRZEUG UND ELEKTROFAHRZEUG MIT EINEM AKKUTRÄGER UND**
BATTERY HOLDER FOR AN ELECTRIC VEHICLE AND ELECTRIC VEHICLE WITH A BATTERY HOLDER
SUPPORT DE BATTERIE POUR UN VÉHICULE ÉLECTRIQUE ET VÉHICULE ÉLECTRIQUE DOTÉ D'UN SUPPORT DE BATTERIE

(30) Priorität: 11.05.2021 DE 102021112253
(43) Veröffentlichungstag der Anmeldung: 20.03.2024
(73) Patentinhaber: E-Works Mobility GmbH, 85737 Ismaning (DE)
(72) Erfinder: ASHKAR, Dominik, 81825 München (DE)
(74) Vertreter: Westphal, Mussgnug & Partner Patentanwälte mbB
(86) Internationale Anmeldenummer: PCT/EP2022/053870
(87) Internationale Veröffentlichungsnummer: WO 2022/238026

(56) Entgegenhaltungen:
- DE-A1- 102013 208 682
- DE-A1- 102017 101 110
- DE-A1- 102018 131 824
- US-A1- 2012 312 612

## Beschreibung

Ein grundlegendes Problem, das bei der Konstruktion von Elektrofahrzeugen zu lösen ist, ist die Anordnung und Halterung der Speicher für die elektrische Energie, also der Akkus, am Fahrzeug. Dies gilt in besonderem Maße für Fahrzeuge, die erst nachträglich durch eine Umrüstung in ein Elektrofahrzeug umgewandelt werden sollen. Angemerkt sei an dieser Stelle, dass der Begriff "Elektrofahrzeug", in dem Sinne, wie er in dieser Beschreibung verwendet wird, auch Hybridfahrzeuge einschließt, also nicht nur auf rein elektrisch angetriebene Fahrzeuge angewendet wird.

Eine solche Umrüstung ist insbesondere bei Nutzfahrzeugen, beispielsweise Transportern, oft erwägenswert. Dafür sind zwei Gründe verantwortlich: Erstens sind Nutzfahrzeuge regelmäßig ohnehin für deutlich höhere Zuladungen ausgelegt als konventionelle PKW. Die Gewichtszunahme durch die Hinzufügung der Antriebskomponenten für den elektrischen Fahrbetrieb ist daher leichter zu verkraften als bei Fahrzeugen, deren zulässiges Gesamtgewicht auch ohne zusätzliche Komponenten für einen Elektroantrieb bereits das Leergewicht des Fahrzeugs nur noch um wenige hundert kg überschreitet. Zweitens bietet sich für die Akkus, die typischerweise relativ schwere Fahrzeugkomponenten darstellen, an, sie unterhalb des Fahrzeugs anzuordnen, um den Fahrzeugschwerpunkt niedrig zu halten. Nutzfahrzeuge, insbesondere Transporter haben aber oft eine größere Bodenfreiheit als PKWs.

Bei der Konstruktion von Elektrofahrzeugen und der Umwandlung eines Fahrzeugs zu einem Elektrofahrzeug oder dessen Nachrüstung zu einem Hybridfahrzeug kommt es regelmäßig zu Konkurrenz mit anderen Fahrzeugkomponenten um den verfügbaren Bauraum. Dies gilt in besonderem Maße für Elektrofahrzeuge, bei denen ein Motor an einem Fahrzeugende angeordnet ist, beispielsweise im Frontbereich, aber zum Antrieb einer Achse am anderen Fahrzeugende, beispielsweise der Hinterachse, verwendet wird, so dass eine Antriebswelle zur Kraftübertragung auf die Hinterachse verwendet wird. Der Verlauf der Antriebswelle ist dabei im Wesentlichen vorgegeben und kann nur in geringen Grenzen angepasst werden.

Aus der DE 10 2012 220 074 A1 ist es bekannt, eine Batterieeinheit mit einem Akku unter der Bodenplatte eines Elektrofahrzeugs anzuordnen, die eine Vertiefung zur Aufnahme der Kardanwelle aufweist. Dieses Arrangement ist aber für schräg verlaufende Kardanwellen, wie sie für Nutzfahrzeuge typisch sind, ungeeignet.

Aus der DE 10 2014 219 224 A1 ist es bekannt, zwei Batterieeinheiten mit Akkus auf gegenüberliegenden Seiten der Antriebswelle anzuordnen und mit einer Verbindungseinheit miteinander zu verbinden. Dabei wird aber wertvoller Bauraum verschenkt.

Weitere Strukturen zur Anordnung von Akku-Zellen bei Hybrid- und/oder Elektrofahrzeugen werden z.B. in DE 10 2018 206 253 A1, DE 10 2019 204 787 A1, DE 10 2018 202 191 A1, DE 10 2015 100 244 A1, DE 10 2018 100 555 A1, DE 10 2013 208 682 A1, DE 10 2017 101 110 A1 und DE 10 2018 131 824 A1 offenbart. US 2012/312 612 A1 offenbart den Oberbegriffs des Anspruchs 1.

Die Aufgabe der Erfindung besteht daher darin, einen insbesondere hinsichtlich der Ausnutzung des Bauraums verbesserten, nachrüstbaren Akkuträger, der insbesondere auch für Nutzfahrzeuge mit schräg verlaufender Antriebswelle geeignet ist, sowie ein mit einem solchen Akkuträger ausgestattetes Elektrofahrzeug bereitzustellen. Diese Aufgabe wird gelöst durch einen Akkuträger mit den Merkmalen des Patentanspruchs 1 und ein Elektrofahrzeug mit den Merkmalen des Patentanspruchs 9. Vorteilhafte Weiterbildungen der Erfindung sind Gegenstand der abhängigen Ansprüche.

Der erfindungsgemäße Akkuträger ist insbesondere für die Nachrüstung eines Fahrzeugs zu einem Elektrofahrzeug geeignet. Er weist sowohl eine U-förmige Bodenplatte, die bei bestimmungsgemäßer Installation des Akkuträgers der Straße zugewandt ist, als auch einen U-förmigen, bevorzugt ebenfalls als Platte ausgestalteten Deckel. Der U-förmige Deckel ist gegenüber der Bodenplatte und bevorzugt parallel zu dieser angeordnet. Bodenplatte und Deckelplatte können grundsätzlich aus mehreren Teilen zusammengesetzt sein, sind aber bevorzugt jeweils einstückig ausgeführt. Bodenplatte und Deckel sind ferner vorzugsweise derart zueinander orientiert angeordnet, dass die offene Seite des U in dieselbe Richtung zeigt.

Wie sich aus der U-Form dieser Komponenten ergibt, weisen sie jeweils zwei sich gegenüberliegende, voneinander beabstandete Schenkel und einen Verbindungsabschnitt, der die beiden sich gegenüberliegenden, voneinander beabstandeten Schenkel an einem Ende miteinander verbindet, auf. Dabei muss der Verbindungsabschnitt nicht zwingend eine Krümmung aufweisen, wie es der Druckbuchstabe "U" meist tut, sondern er kann auch gerade ausgeführt sein, wie man es beispielsweise von typischen U-Profilen kennt.

Insbesondere sind vorzugsweise sowohl die Gesamtlängen der Bodenplatte und des Deckels als auch die Gesamtbreiten der Bodenplatte und des Deckels identisch.

Noch weiter weist der Akkuträger Wandabschnitte auf, die die U-förmige Bodenplatte und den U-förmigen Deckel miteinander verbinden, so dass ein U-förmiger Akkuträgerinnenraum mit Schenkeln und einem Verbindungsabschnitt entsteht. Die Wandabschnitte stehen dabei bevorzugt senkrecht sowohl auf der Bodenplatte als auch auf dem Deckel. Insgesamt entsteht dadurch eine Akkuträgerkiste, in deren Innenraum die Akkus sowie zugehörige Elektronik und Sensorik geschützt angeordnet werden können und die bei geeigneter Auslegung eine Stabilisierung des gesamten Fahrzeugs und Verbesserung der Sicherheit für Insassen des Fahrzeugs bei Unfällen bewirken kann.

Eine Besonderheit dieses Akkuträgers bzw. dieser Akkuträgerkiste ist, dass sie wegen der U-Form von Bodenplatte und Deckel an einer Seite, die zweckmäßigerweise bei installiertem Akkuträger der angetriebenen Achse zugewandt ist, einen Schlitz aufweist, in dem ein Abschnitt einer schräg verlaufenden Antriebswelle frei verlaufen kann, und dies auch beim Ein- bzw. Ausfedern des Fahrzeugs.

Insbesondere wird bei dem erfindungsgemäßen Akkuträger durch die Bodenplatte ein Abschluss des Akkuträgers in Richtung auf die Fahrbahn hin erzielt, der bei der Fahrt den Luftwiderstand auf den Unterboden durch den Fahrtwind minimiert und das Fahrverhalten stabilisiert. Zudem schützt die Bodenplatte die Module des Akkus und Teile der Antriebswelle gegen Beschädigung von unten.

Zudem ist der Akkuträger schon durch seine Formgebung, die seinen Schwerpunkt nach vorne, also bei installiertem Akkuträger in Richtung Motor verlagert, so ausgelegt, dass er die Achslast auf die Hinterräder nicht übermäßig erhöht und weiterhin eine hohe Zuladung auf die Hinterachse erfolgen kann. Dieser Effekt kann vorzugsweise durch eine weiter unten beschriebene geschickte Materialauswahl noch weiter verstärkt werden.

Gemäß der Erfindung ist vorgesehen, dass die sich gegenüberliegenden, voneinander beabstandeten Schenkel der Bodenplatte kürzer sind als die sich gegenüberliegenden, voneinander beabstandeten Schenkel des Deckels, so dass zwischen den Schenkeln des U-förmigen Akkuträgerinnenraums ein Stabilisierungsabschnitt der U-förmigen Bodenplatte vorhanden ist, der keine Grenzfläche des U-förmigen Akkuträgerinnenraums bildet. Dementsprechend ist bei gleicher Länge von Bodenplatte und Deckel die Länge des Verbindungsabschnitts der Bodenplatte größer als die des Verbindungsabschnitts des Deckels.

Diese unterschiedlichen U-Formen von Bodenplatte und Deckel entstehen bevorzugt dadurch, dass in zwei zunächst identisch geformte Platten, die zu Bodenplatte und Deckel gemacht werden, jeweils ein hinsichtlich seiner Länge unterschiedlicher Spalt, der zwischen den beiden Schenkeln eines U vorhanden ist, eingebracht wird, wobei der Spalt jeweils von demselben Randbereich beider Platten ausgeht.

Dieser Stabilisierungsabschnitt schützt den über ihm verlaufenden Abschnitt der Antriebswelle, und verbessert zudem die Abstützung der beiden Schenkel des Akkuträgers gegeneinander, was das Crashverhalten bei einer seitlichen Krafteinwirkung im Bereich der Spitzen der Schenkel des Akkuträgers verbessert.

Weiter verstärkt wird dieser Effekt dadurch, mindestens eine Querverstrebung angeordnet ist, die sich natürlich nur so weit nach oben, also in Richtung auf den Fahrzeugboden hin, erstrecken darf, dass der freie Lauf der Antriebswelle nicht beeinträchtigt wird. Wenn dabei auf dem Stabilisierungsabschnitt zwischen einander gegenüberliegenden Wandabschnitten mehr als eine Querverstrebung angeordnet ist und die Höhe benachbarter Querverstrebungen in Richtung auf den Verbindungsabschnitt des Akkuträgerinnenraums hin zunimmt, kann durch resultierenden Berücksichtigung des schrägen Verlaufs der Antriebswelle folgend die Stärke der Querverstrebungen weiter optimiert werden.

Dadurch, dass mindestens eine Querverstrebung an ihrer vom Boden weg zeigenden Seite eine Ausnehmung aufweist, kann sichergestellt werden, dass trotz der Querverstrebungen der Lauf der Antriebswelle nicht beeinträchtigt wird.

Als Konsequenz aus der gewählten geometrischen Konfiguration ist somit sichergestellt, dass der Akkuträger eine formstabile und kompakte, den durch den Freiraum unterhalb des Fahrzeugs und um die Antriebswelle herum vorgegebenen beschränkten Bauraum optimal ausnutzende Einheit darstellt und eine maximale Anzahl von Batteriemodulen und gegebenenfalls Steuer- und Überwachungselektronik aufnehmen kann.

Ein besonders vorteilhaftes Material, aus dem der Akkuträger zumindest teilweise gefertigt ist, ist Aluminiumschaum. Insbesondere sollte vorzugsweise zumindest die Bodenplatte des Ackuträgers und idealerweise der gesamte Akkuträger aus diesem mechanisch hoch belastbaren und leichten Material gefertigt werden. Dieses Material ist zudem rostfrei, nicht brennbar und erfüllt die Brandschutznorm DIN EN 45545-2, wobei die Feuerwiderstandsklassen E30, DIN EN 13501-2 bzw. DIN EN 1363-1 erreicht werden. Es kann ohne Entstehung toxischer Gase geschweißt werden, so dass etwaige Beschädigungen leicht repariert werden können. Zudem bietet es eine gute elektromagnetische Abschirmung, was sich vorteilhaft beim Bestehen von EMV-Prüfungen durch den TÜV auswirkt, und reduziert effektiv Schwingungen.

Vorzugsweise sind Deckel, Bodenplatte und Wandabschnitte so miteinander verbunden und abgedichtet, dass der Akkuträgerinnenraum wasserdicht ist. Konkret kann diese beispielsweise dadurch erreicht werden, dass die Wandabschnitte mit Deckel und Bodenplatte verschweißt oder verklebt sind, wobei sie vorzugsweise zusätzlich in in den Deckel bzw. in die Bodenplatte eingebrachte Nuten eingepasst sind.

Wenn der Akkuträger Montagepunkte zur Montage seitlich am Rahmen, am Vorderachsrahmen, an einer Blattfederaufnahme und/oder mittig am Rahmen eines Fahrzeugs aufweist, kann der Akkuträger zudem sehr einfach und kostengünstig nachgerüstet bzw. installiert werden.

Ein erfindungsgemäßes Elektrofahrzeug hat einen Fahrzeugrahmen, einen an einem Ende des Elektrofahrzeugs angeordneten Motor, eine an dem dem Motor gegenüberliegenden Ende des Elektrofahrzeugs angeordnete angetriebenen Achse und eine Antriebswelle, die vom Motor angetrieben wird, um die Antriebskraft auf die angetriebene Achse zu übertragen. Anzumerken ist dabei, dass der Begriff "Ende des Fahrzeugs" hier in dem Sinne verwendet wird, dass bei einem üblichen Kraftfahrzeug mit einem Frontmotor der Motor an dessen vorderen Ende angeordnet ist, während bei einem üblichen Kraftfahrzeug mit einem Heckmotor der Motor an dessen hinterem Ende angeordnet ist. Insofern ist das Wort "Ende" hier nicht als ein Endpunkt oder eine Grenze, sondern als ein Endbereich zu verstehen.

Dabei verläuft die Antriebswelle vom Motor zur angetriebenen Achse schräg von oben nach unten, also ausgehend vom Motor schräg auf die Fahrbahn zu. Das Elektrofahrzeug weist ferner einen Elektroantrieb, der über in einem Akkuträger angeordnete Akkus mit Strom versorgt werden kann, auf. Erfindungswesentlich ist, dass der Akkuträger ein erfindungsgemäßer Akkuträger ist und dass die Antriebswelle den Bereich zwischen den Schenkeln des Akkuträgerinnenraums zumindest abschnittsweise durchquert.

Die Erfindung wird nachfolgend anhand von Figuren, die ein Ausführungsbeispiel zeigen, näher erläutert. Es zeigt:
- Fig.1:: Ein Ausführungsbeispiel eines Akkuträgers,
- Fig.2:: einen Blick von unten auf den Rahmen eines Elektrofahrzeugs mit daran befestigtem Akkuträger gemäß Figur 1,
- Fig.3:: einen Blick von oben auf den Rahmen eines Elektrofahrzeugs mit daran befestigtem Akkuträger gemäß Figur 1, und
- Fig.4:: eine Seitenansicht des Rahmens eines Elektrofahrzeugs mit daran befestigtem Akkuträger gemäß Figur 1.

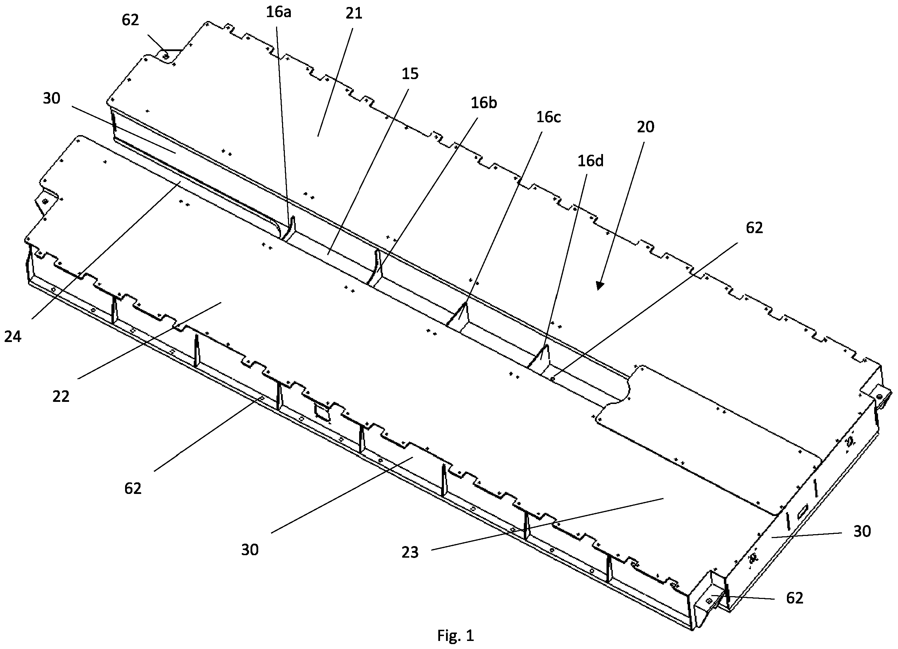

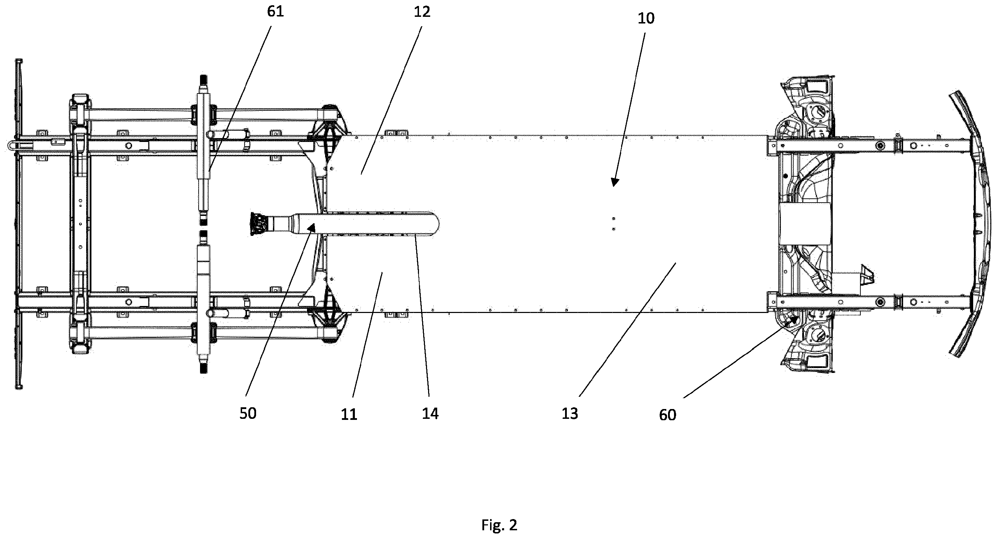

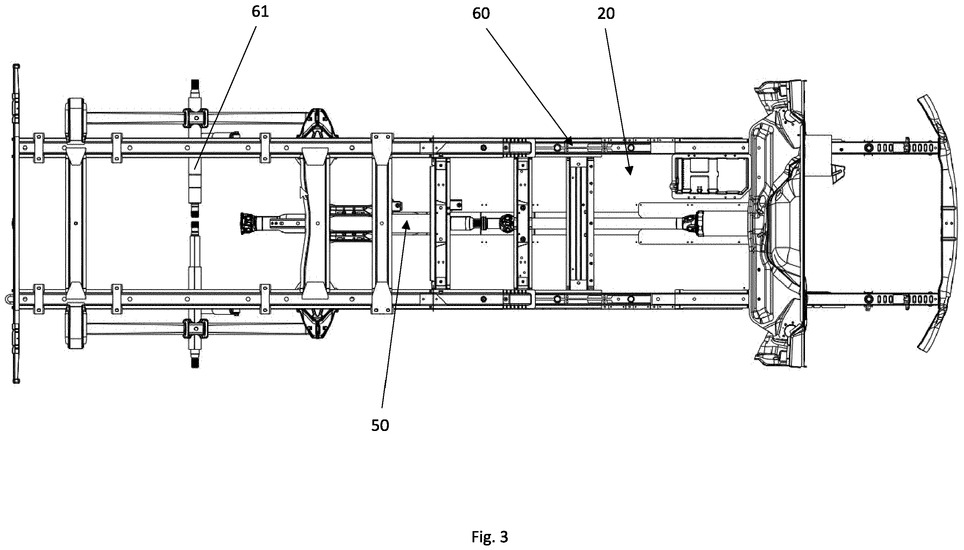

Der in den Figuren 1 bis 4 dargestellte Akkuträger 1 hat, wie man besonders gut in der Ansicht der Figur 2 sieht, eine U-förmigen Bodenplatte 10, die insbesondere zwei sich gegenüberliegende, durch einen Schlitz 14 voneinander beabstandete Schenkel 11,12 und einen Verbindungsabschnitt 13, der die beiden sich gegenüberliegenden, voneinander beabstandeten Schenkel 11,12 an ihrem dem Motor zugewandten Ende miteinander verbindet. Wie man ebenfalls in der Darstellung der Figur 2 gut erkennt, ist die Bodenplatte 10, die vorzugsweise aus Aluminiumschaum gefertigt ist, einstückig ausgeführt und bildet auf der bei bestimmungsgemäßem Gebrauch der Fahrbahn zugewandten Seite eine glatte Ebene, was den Luftwiderstand positiv beeinflusst. Durch den Schlitz 14 ragt das der angetriebenen Achse 61 zugewandte Ende einer Antriebswelle 50. Die Verbindung zwischen Antriebswelle 50 und angetriebener Achse 61 erfolgt beispielsweise über ein hier nicht dargestelltes Differentialgetriebe.

Der Akkuträger 1 hat weiterhin einen in Figur 1 gut erkennbaren U-förmigen Deckel 20, der zwei sich gegenüberliegende, durch einen Schlitz 24 voneinander beabstandete Schenkel 21,22 und einen Verbindungsabschnitt 23, der die beiden sich gegenüberliegenden, voneinander beabstandeten Schenkel 21,22 ihrem dem Motor zugewandten Ende miteinander verbindet. Im hier gezeigten Beispiel ist der Deckel 20 mehrteilig.

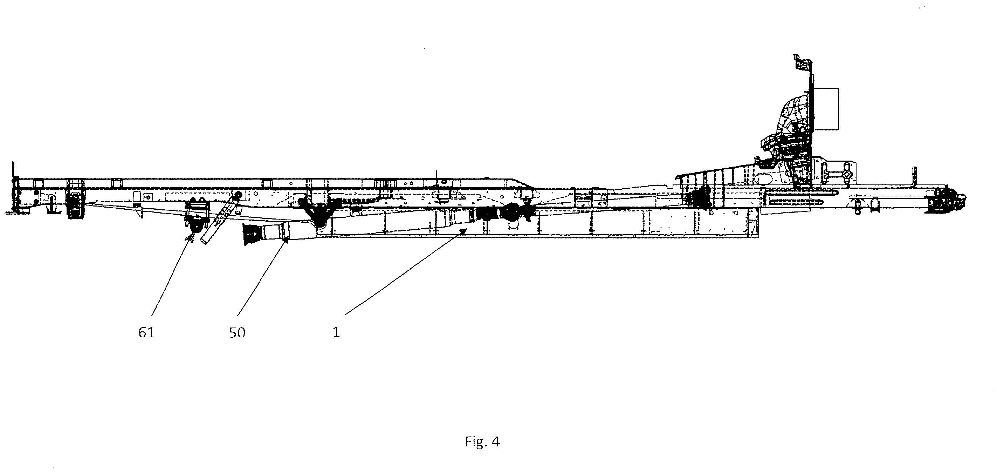

Wie die Figuren 1 und 4 besonders gut zeigen, sind die U-förmige Bodenplatte 10 und der U-förmige Deckel 20 allseitig durch sich von den Rändern des U-förmigen Deckels 20 im Wesentlichen senkrecht zur Bodenplatte verlaufende Wandabschnitte 30 miteinander verbunden, so der Akkuträger 1 durch eine nach allen Seiten in abgeschlossene (Akku-) Kiste gebildet wird, die U-förmig ist und einen U-förmigen Akkuträgerinnenraum mit Schenkeln und einem Verbindungsabschnitt aufweist. Dieser Innenraum steht dementsprechend für die Aufnahmen der in den Figuren nicht dargestellten Akkus bzw. Batteriemodule sowie optional auch deren Steuer- und Überwachungselektronik zur Verfügung. Grundfläche und Form des Innenraums sind im Wesentlichen durch die Form des Deckels 20 vorgegeben, so dass die Schenkel des U-förmigen Akkuträgerinnenraums die Bereiche sind, in denen die Schenkel 21,22 des Deckels die Decke des U-förmigen Akkuträgerinnenraums bilden und der Verbindungsabschnitt des U-förmigen Akkuträgerinnenraums der Bereich ist, in dem der Verbindungsabschnitt 23 die Decke des U-förmigen Akkuträgerinnenraums bildet.

Wie man in Figur 1 gut erkennt, ist in diesem Ausführungsbeispiel die geometrische Grundform von Bodenplatte 10 und Deckel 20 im Wesentlichen identisch, was insbesondere für die jeweilige Gesamtlänge und Gesamtbreite gilt. Der wesentliche Unterschied zwischen diesen Formen kommt dadurch zustande, dass die Schlitze 14 und 24 zwar gleich breit sind und von gleichen Randabschnitten ausgehen, aber der Schlitz 14 in der Bodenplatte 10 kürzer ist als der Schlitz 24 im Deckel 20. Daraus resultiert dann auch, dass die sich gegenüberliegenden, voneinander beabstandeten Schenkel 11,12 der Bodenplatte 10 kürzer sind als die sich gegenüberliegenden, voneinander beabstandeten Schenkel 21,22 des Deckels 20, so das zwischen den Schenkeln des U-förmigen Akkuträgerinnenraums ein Stabilisierungsabschnitt 15 der U-förmigen Bodenplatte 10 vorhanden ist, der keine Grenzfläche oder Wand des U-förmigen Akkuträgerinnenraums bildet.

Einerseits wird durch diesen Stabilisierungsabschnitt 15 die Antriebswelle 50 gegen Beschädigung von unten geschützt, andererseits stützt er auch die Schenkel des Akkuträgers gegeneinander ab und versteift diesen dadurch. Der letztgenannte Effekt wird noch dadurch verstärkt, dass auf dem Stabilisierungsabschnitt 15 zwischen einander gegenüberliegenden Wandabschnitten der einander zugewandten Schenkelinnenseiten Querverstrebungen 16a,16b,16c,16 angeordnet sind, wobei die Höhe benachbarter Querverstrebungen 16a,16b,16c,16d in Richtung auf den Verbindungsabschnitt des Akkuträgerinnenraums hin zunimmt.

Dabei weisen die Querverstrebungen 16a,16b an ihrer vom Boden weg zeigenden Seite jeweils eine Ausnehmung auf, um sicherzustellen, dass die Antriebswelle 50 jederzeit frei drehen kann.

In Figur 1 erkennt man ferner, dass der Akkuträger 1 eine Vielzahl von Montagepunkten 62 zur Montage seitlich am Rahmen 60, insbesondere an einem am Vorderachsrahmen, an einer Blattfederaufnahme und/oder mittig am Rahmen 60 des Elektrofahrzeugs aufweist.

### Bezugszeichenliste

- 1: Akkuträger
- 10: Bodenplatte
- 11,12: Schenkel
- 13: Verbindungsabschnitt
- 14: Schlitz
- 15: Stabilisierungsabschnitt
- 16a,16b,16c,16d: Querverstrebung
- 20: Deckel
- 21,22: Schenkel
- 23: Verbindungsabschnitt
- 24: Schlitz
- 30: Wandabschnitt
- 50: Antriebswelle
- 60: Rahmen
- 61: angetriebene Achse
- 62: Montagepunkt

## Patentansprüche

1. Akkuträger (1) für die Nachrüstung eines Fahrzeugs zu einem Elektrofahrzeug, wobei der Akkuträger (1)
- eine U-förmige Bodenplatte (10), die zwei sich gegenüberliegende, voneinander beabstandete Schenkel (11,12) und einen Verbindungsabschnitt (13), der die beiden sich gegenüberliegenden, voneinander beabstandeten Schenkel (11,12) an einem Ende miteinander verbindet, aufweist,
- einen U-förmigen Deckel (20), der zwei sich gegenüberliegende, voneinander beabstandete Schenkel (21,22) und einen Verbindungsabschnitt (23), der die beiden sich gegenüberliegenden, voneinander beabstandeten Schenkel (21,22) an einem Ende miteinander verbindet, aufweist, und
- Wandabschnitte (30) aufweist, die die U-förmige Bodenplatte (10) und den U-förmigen Deckel (20) miteinander verbinden, so dass ein U-förmiger Akkuträgerinnenraum mit Schenkeln und einem Verbindungsabschnitt entsteht,
**dadurch gekennzeichnet, dass** die sich gegenüberliegenden, voneinander beabstandeten Schenkel (11,12) der Bodenplatte (10) kürzer sind als die sich gegenüberliegenden, voneinander beabstandeten Schenkel (22,23) des Deckels (20, so dass zwischen den Schenkeln des U-förmigen Akkuträgerinnenraums ein Stabilisierungsabschnitt (15) der U-förmigen Bodenplatte (10) vorhanden ist, der keine Grenzfläche des U-förmigen Akkuträgerinnenraums bildet.

2. Akkuträger (1) nach Anspruch 1,
**dadurch gekennzeichnet, dass** auf dem Stabilisierungsabschnitt (15) zwischen einander gegenüberliegenden Wandabschnitten (30) mindestens eine Querverstrebung (16a,16b,16c,16d) angeordnet ist.

3. Akkuträger (1) nach Anspruch 2,
**dadurch gekennzeichnet, dass** auf dem Stabilisierungsabschnitt (15) zwischen einander gegenüberliegenden Wandabschnitten (30) mehr als eine Querverstrebung (16a,16b,16c,16d) angeordnet ist und dass die Höhe benachbarter Querverstrebungen (16a,16b,16c,16d) in Richtung auf den Verbindungsabschnitt (15) der Bodenplatte (10) hin zunimmt.

4. Akkuträger (1) nach einem der Ansprüche 2 oder 3,
**dadurch gekennzeichnet, dass** mindestens eine Querverstrebung (16a,16b) an ihrer vom Boden weg zeigenden Seite eine Ausnehmung aufweist.

5. Akkuträger (1) nach einem der vorstehende Ansprüche,
**dadurch gekennzeichnet, dass** der Ackuträger (1) zumindest teilweise aus Aluminiumschaum gefertigt ist.

6. Akkuträger (1) nach einem der vorstehenden Ansprüche,
**dadurch gekennzeichnet, dass** der Ackuträgerinnenraum wasserdicht ist.

7. Akkuträger (1) nach einem der vorstehenden Ansprüche,
**dadurch gekennzeichnet, dass** der Ackuträger (1) Montagepunkte (62) zur Montage seitlich am Rahmen (60), am Vorderachsrahmen, an einer Blattfederaufnahme und/oder mittig am Rahmen (60) eines Fahrzeugs aufweist.

8. Elektrofahrzeug mit einem Rahmen (60), mit einem an einem Ende des Elektrofahrzeugs angeordneten Motor, mit einer an dem dem Motor gegenüberliegenden Ende des Elektrofahrzeugs angeordneten angetriebenen Achse (61) und mit einer Antriebswelle (50), die, wenn sie vom Motor angetrieben wird, Antriebskraft auf die angetriebene Achse (61) übertragen kann, wobei die Antriebswelle (50) vom Motor zur angetriebenen Achse (61) schräg von oben nach unten verläuft, wobei das Elektrofahrzeug ferner einen Elektroantrieb, der über in einem Akkuträger (1) angeordnete Akkus mit Strom versorgt werden kann, aufweist,
**dadurch gekennzeichnet, dass** der Ackuträger (1) ein Akkuträger (1) nach einem der Ansprüche 1 bis 7 ist und dass die Antriebswelle (50) den Bereich zwischen den Schenkeln des Akkuträgerinnenraums zumindest abschnittsweise durchquert.

## Claims

1. Battery holder (1) for retrofitting a vehicle to become an electric vehicle, wherein the battery holder (1)
- has a U-shaped base plate (10) which comprises two opposing, mutually spaced legs (11, 12) and a connecting portion (13) which interconnects the two opposing, mutually spaced legs (11, 12) at one end,
- a U-shaped cover (20) which comprises two opposing, mutually spaced legs (21, 22) and a connecting portion (23) which interconnects the two opposing, mutually spaced legs (21, 22) at one and, and
- wall portions (30) which interconnect the U-shaped base plate (10) and the U-shaped cover (20) such that a U-shaped battery holder interior with legs and a connecting portion results,
**characterised in that** the opposing, mutually spaced legs (11, 12) of the base plate (10) are shorter than the opposing, mutually spaced legs (22, 23) of the cover (20), such that a stabilisation portion (15) of the U-shaped base plate (10) is present between the legs of the U-shaped battery holder interior, which stabilisation portion does not form a boundary of the U-shaped batter holder interior.

2. Battery holder (1) according to claim 1,
**characterised in that** at least one cross-brace (16a, 16b, 16c, 16d) is arranged on the stabilising portion (15), between mutually opposing wall portions (30).

3. Battery holder (1) according to claim 2,
**characterised in that** more than one cross-brace (16a, 16b, 16c, 16d) is arranged on the stabilising portion (15) between mutually opposing wall portions (30), and **in that** the height of neighbouring cross-braces (16a, 16b, 16c, 16d) increases in the direction towards the connecting portion (15) of the base plate (10).

4. Battery holder (1) according to either claim 2 or claim 3,
**characterised in that** at least one cross-brace (16a, 16b) comprises a recess on its side facing away from the base.

5. Battery holder (1) according to any of the preceding claims,
**characterised in that** the battery holder (1) is produced at least in part from aluminium foam.

6. Battery holder (1) according to any of the preceding claims,
**characterised in that** the battery holder interior is watertight.

7. Battery holder (1) according to any of the preceding claims,
**characterised in that** the battery holder (1) comprises mounting points (62) for mounting laterally on the frame (60), on the front axle frame, on a leaf spring receptacle and/or centrally on the frame (60) of a vehicle.

8. Electric vehicle comprising a frame (60), comprising a motor arranged on one end of the electric vehicle, comprising a driven axle (61) arranged on the end of the electric vehicle opposite the motor, and comprising a drive shaft (50) which, when driven by the motor, can transmit a drive force to the driven axle (61), wherein the drive shaft (50) extends obliquely from top to bottom from the motor to the driven axle (61), wherein the electric vehicle further comprises an electric drive which can be supplied with electricity via a battery arranged in the battery holder (1),
**characterised in that** the battery holder (1) is a battery holder (1) according to any of claims 1 to 7 and **in that** the drive shaft (50) crosses the region between the legs of the battery holder interior, at least in portions.

## Revendications

1. Support (1) de batterie pour le rééquipement d'un véhicule en un véhicule électrique, dans lequel le support (1) d'accumulateur a
- une plaque (10) de fond en forme de U, qui a deux branches (11, 12) opposées et à distance l'une de l'autre, et une partie (13) de liaison, qui relie entre elles à une extrémité les deux branches (11, 12) opposées à distance l'une de l'autre,
- un couvercle (20) en forme de U, qui a deux branches (21, 22) opposées à distance l'une de l'autre, et une partie (23) de liaison, qui relie entre elles à une extrémité les deux branches (21, 22) opposées à distance l'une de l'autre, et
- des parties (30) de paroi, qui relient entre eux la plaque (10) en forme de U et le couvercle (20) en forme de U de manière à créer un espace intérieur en forme de U de support d'accumulateur ayant des branches et une partie de liaison,
**caractérisé en ce que** les branches (11, 12) opposées à distance l'une de l'autre de la plaque (10) de fond sont plus courtes que les branches (22, 23) opposées à distance l'une de l'autre du couvercle (20) de manière à avoir, entre les branches de l'espace intérieur en forme de U du support d'accumulateur, une partie (15) de stabilisation de la plaque (10) de fond en forme de U, qui ne forme pas de surface limite de l'espace intérieur en forme de U du support d'accumulateur.

2. Support (1) d'accumulateur selon la revendication 1, **caractérisé en ce qu'**au moins une traverse (16a, 16b, 16c, 16d) est montée sur la partie (15) de stabilisation entre des parties (30) de paroi opposées l'une à l'autre.

3. Support (1) d'accumulateur selon la revendication 2, **caractérisé en ce que** plus d'une traverse (16a, 16b, 16c, 16d) est montée sur la partie (15) de stabilisation entre des parties (30) de paroi opposées l'une à l'autre et **en ce que** la hauteur de traverses (16a, 16b, 16c, 16d) voisines augmente dans la direction vers la partie (15) de liaison de la plaque (10) de fond.

4. Support (1) d'accumulateur selon l'une des revendications 2 ou 3,
**caractérisé en ce qu'**au moins une traverse (16a, 16b) a un évidement sur son côté non tourné vers le fond.

5. Support (1) d'accumulateur selon l'une des revendications précédentes,
**caractérisé en ce que** le support (1) d'accumulateur est fabriqué au moins en partie en mousse d'aluminium.

6. Support (1) d'accumulateur selon l'une des revendications précédentes,
**caractérisé en ce que** l'espace intérieur du support d'accumulateur est étanche à l'eau.

7. Support (1) d'accumulateur selon l'une des revendications précédentes,
**caractérisé en ce que** le support (1) d'accumulateur a des points (62) de montage pour le montage latéralement au châssis (60), au châssis d'essieu avant, à un logement de ressort à lame et/ou au milieu au châssis (60) d'un véhicule.

8. Véhicule électrique comprenant un châssis (60), comprenant un moteur monté à une extrémité du véhicule électrique comprenant un essieu (61) moteur, monté à l'extrémité opposée au moteur du véhicule électrique, et comprenant un arbre (50) d'entraînement, qui, lorsqu'il est entraîné par le moteur, peut transmettre de la force d'entraînement à l'essieu (61) moteur, dans lequel l'arbre (50) d'entraînement s'étend en étant incliné de haut en bas du moteur à l'essieu (61) moteur, dans lequel le véhicule électrique a en outre un entraînement électrique, qui peut être alimenté en courant par un accumulateur disposé dans un support (1) d'accumulateur,
**caractérisé en ce que** le support (1) d'accumulateur est un support (1) d'accumulateur suivant l'une des revendications 1 à 7 et **en ce que** l'arbre (50) d'entraînement traverse au moins par endroit la partie comprise entre les branches de l'espace intérieur du support d'accumulateur.
